# EUROPEAN PATENT APPLICATION

(11) **EP 1 918 680 A1**
(43) Date of publication of application: **07.05.2008**
(21) Application number: 06810066.8
(22) Date of filing: 06.09.2006
(51) Int. Cl.: G01D 5/245

(54) **ROTARY ENCODER AND DRIVE DEVICE**

(30) Priority: 07.09.2005 CN 200510098787
(71) Applicant: Sony Corporation, Tokyo 141-0001 (JP)
(72) Inventor: HIRANO, Kenichi c/o SONY CORPORATION, Tokyo (JP); JIAO, Xuefeng Lupfung Electronic Component Co.Ltd Engineer Dpt, Boluo, Huizhou, Guangdong (CN)
(74) Representative: Nicholls, Michael John
(86) International application number: PCT/JP2006/318101
(87) International publication number: WO 2007/029868

(57) **Abstract**

The present invention simplifies the configuration of a rotary encoder. In the present invention, a plate spring 3, which includes a plurality of arm sections 3BX to 3FX where curving projection sections 3BZ to 3FZ are formed and whose tips are movable contacts 3BX to 3FX, is attached to a base 2 including a plurality of fixed contacts 6 to 10. In addition, a gear 4, whose one surface's concentric positions are equipped with a plurality of curving-line-shaped projection sections 4C to 4G, is attached so that it can rotate. When the gear 4 rotates, the curving-line-shaped projection sections 4C to 4G push the curving projection sections 3BZ to 3FZ and the movable contacts 3BX to 3FX of the arm sections 3B to 3F touch the fixed contacts 6 to 10. Accordingly, since there is no component between the gear 4 and the plate spring 3 to push down the arm sections 3B to 3F, the configuration of the rotary encoder 1 can be simplified.

## Description

### Technical Field

The present invention relates to a rotary encoder and drive apparatus, and is preferably applied to a rotary encoder of a disc playback apparatus that includes an auto-changer function for CD (Compact Disc), for example.

### Background Art

In a conventional rotary encoder, the components are arranged in the following order: a plurality of contact spring blocks, which are placed above a plurality of fixed contacts on a base and whose tips are movable contacts; a plurality of intermediate cams, which are provided at the tip of a flexible arm and in the shape of a short-length circular cylinder, a ball or the like; and a discoid rotor, which includes a plurality of arc-shaped convex strips on its undersurface. In this case, the intermediate cam is equipped with a shaft that is suspended between bearing stands protruding from the base such that it can freely move upward and downward along a long shaft hole or groove vertically formed on the bearing stands. And in the rotary encoder, when the rotor rotates and the convex strip runs on the intermediate cam, the convex strip vertically pushes down the intermediate cam and, at the same time, bends the corresponding contact spring block downward so that the movable contact touches the fixed contact. On the other hand, in the rotary encoder, when the rotor rotates and the convex strip comes down from the intermediate cam, the intermediate cam vertically rises up and the corresponding contact spring block at the same time unbends itself to rise up. As a result, the movable contact separates from the fixed contact (see Patent Document 1, for example).

Moreover, a conventional mode switch has a similar configuration to the rotary encoder. The mode switch's components are arranged in the following order: a plate, which is placed above a plurality of fixed contacts on a base and has a plurality of contact spring blocks whose tips are movable contacts; an actuator plate, which includes a plurality of actuators; a discoid rotor, which includes a plurality of convex strips or projections on its undersurface. In this case, the plate is placed such that its movable contacts face the corresponding fixed contacts on the base that is positioned away from the plate. In addition, the actuator includes a guide projection. The guide projection engages with a guide groove or a guide hole formed on a base's guide brace member such that it can vertically move upward and downward. And in the mode switch, when the rotor rotates and the convex strip or projection runs on the actuator, the convex strip or projection vertically pushes down the actuator and at the same time pushes down the corresponding contact spring block in order to firmly put the movable contact down on the fixed contact. On the other hand, in the mode switch, when the rotor rotates and the convex strip or projection comes down from the actuator, the contact spring block unbends itself. As a result, the actuator vertically rises up to the previous position and the movable contact moves away from the fixed contact (see Patent Document 2, for example).
Patent Document 1: Japanese Patent Application Laid-Open No. H9-231867 (Pages 1 and 4, and Figs. 2, 3 and 6)
Patent Document 2: Japanese Patent Application Laid-Open No. 2000-182477 (Pages 1 and 2, and Figs. 8, 9 and 22)

However, the above rotary encoder and mode switch are configured so that the rotor can push down the contact spring block through the intermediate cam and the actuator. This increases the complexity of the rotary encoder and the mode switch as a whole.

### Disclosure of the Invention

The present invention has been made in view of the above points and is intended to provide a rotary encoder whose structure can be simplified and a drive apparatus that can simplify the structure of the rotary encoder.

To solve the above problem, a rotary encoder of the present invention includes: a base whose undersurface's concentric positions are provided with fixed contacts; a plate spring that includes a plurality of arm sections whose tips are equipped with movable contacts corresponding to the fixed contacts and that also includes curving projection sections between the tips of the arm sections and base ends; and a gear whose one surface's concentric positions are provided with curving-line-shaped projection sections that extend along the concentric circles and that correspond to the curving projection sections of the plate spring, wherein: the plate spring is attached to the base such that the movable contacts correspond to the fixed contacts; the gear is attached to the base such that the gear can rotate and the curving-line-shaped projection sections correspond to the curving projection sections of the plate spring; and, when the gear rotates, at least one of the curving-line-shaped projection sections pushes the corresponding curving projection section and the movable contact at the tip of the arm section on which the pushed curving projection section is formed touches the corresponding fixed contact.

Accordingly, in the rotary encoder of the present invention, the gear's curving-line-shaped projection sections directly push the plate spring's curving projection sections to make the movable contacts of the arm sections where the curving projection sections are formed contact the corresponding fixed contacts. Thus, in the rotary encoder of the present invention, since there is no component between the gear and the plate spring to convey the bulge of the gear's curving-line-shaped projection sections to the plate spring's arm sections and push down the arm sections, the configuration of the rotary encoder can be simplified.

According to the present invention, a rotary encoder includes: a base whose undersurface's concentric positions are provided with fixed contacts; a plate spring that includes a plurality of arm sections whose tips are equipped with movable contacts corresponding to the fixed contacts and that also includes curving projection sections between the tips of the arm sections and base ends; and a gear whose one surface's concentric positions are provided with curving-line-shaped projection sections that extend along the concentric circles and that correspond to the curving projection sections of the plate spring, wherein: the plate spring is attached to the base such that the movable contacts correspond to the fixed contacts; the gear is attached to the base such that the gear can rotate and the curving-line-shaped projection sections correspond to the curving projection sections of the plate spring; and, when the gear rotates, at least one of the curving-line-shaped projection sections pushes the corresponding curving projection section and the movable contact at the tip of the arm section on which the pushed curving projection section is formed touches the corresponding fixed contact. Accordingly, the gear's curving-line-shaped projection sections directly push the plate spring's curving projection sections to make the movable contacts of the arm sections where the curving projection sections are formed contact the corresponding fixed contacts. Thus, since there is no component between the gear and the plate spring to convey the bulge of the gear's curving-line-shaped projection sections to the plate spring's arm sections and push down the arm sections, the configuration of the rotary encoder can be simplified. This realizes a rotary encoder whose structure can be simplified and a drive apparatus that can simplify the structure of the rotary encoder.

### Brief Description of the Drawings

Fig. 1 is a schematic exploded, perspective view illustrating the overall configuration of a rotary encoder according to an embodiment of the present invention.
Fig. 2 is a schematic perspective view illustrating the outline configuration of a rotary encoder.
Fig. 3 is a schematic side view illustrating the configuration of a plate spring.
Fig. 4 is a schematic perspective view illustrating how to attach a plate spring to a base.
Fig. 5 is a schematic cross-sectional view of a plate spring attached to a base.
Fig. 6 is a schematic diagram illustrating the configuration of one surface of a gear.
Fig. 7 is a schematic cross-sectional view illustrating a movable contact contacting a fixed contact.
Fig. 8 is a schematic side view illustrating the configuration of the tip of a curving projection section.
Fig. 9 is a schematic perspective view illustrating the overall configuration of a disc playback apparatus.
Fig. 10 is a schematic perspective view illustrating the configuration of an up-and-down driving mechanism.
Fig. 11 is a block diagram illustrating the circuit configuration of a disc playback apparatus.
Fig. 12 is a schematic diagram illustrating an output of a rotary encoder.
Fig. 13 is a schematic side view illustrating how a CD drive rises and lowers.

### Best Mode for Carrying Out the Invention

An embodiment of the present invention will be described in detail with reference to the accompanying drawings.

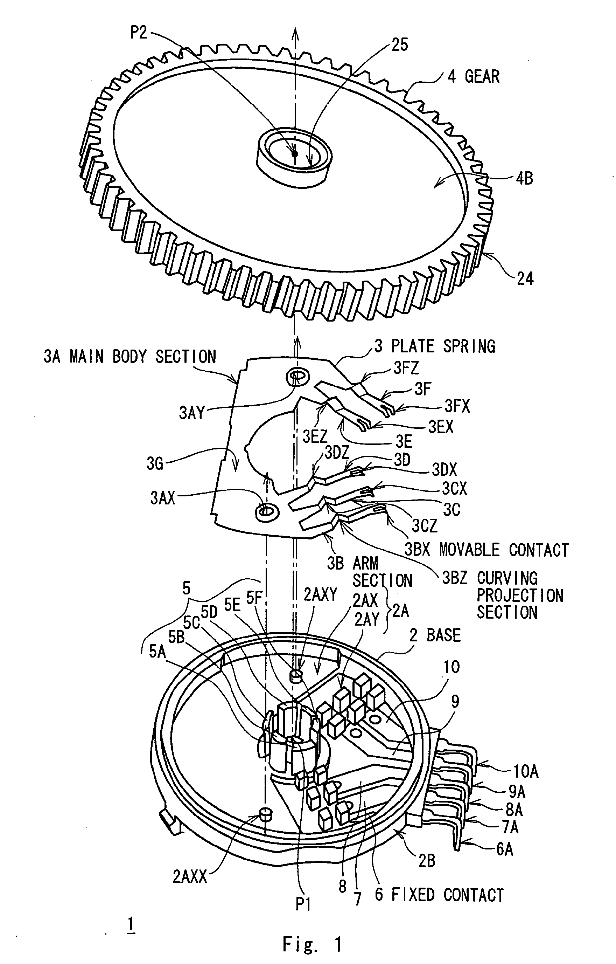

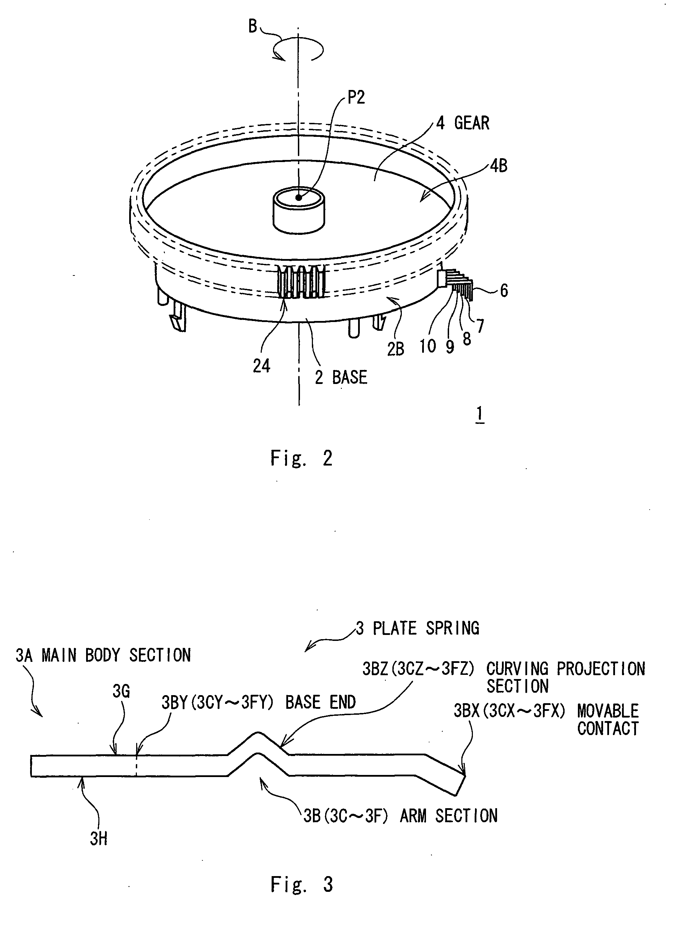

In Figs. 1 and 2, the reference numeral 1 as a whole denotes a rotary encoder according to the present invention. A plate spring 3 that is made of electroconductive metal and formed substantially in the shape of comb's teeth is attached to a concave undersurface 2A of a base 2 that is made of electrically-insulating resin and formed substantially in the shape of a circular dish. In addition, a discoid gear 4 that is made of electrically-insulating resin is attached as if it covers a concave section of the base 2. In this case, first and second step sections 2AX and 2AY, each of which has a different depth, are formed on the concave undersurface 2A of the base 2. Moreover, at the center of the concave undersurface 2A of the base 2, a plurality of shaft blocks 5A to 5F are arranged in a circle to form a rotation shaft 5: The cross sections of the shaft blocks 5A to 5F are arc-shaped. Furthermore, on the second step section 2AY (which is deeper than the first step section 2AX) of the concave undersurface 2A of the base 2, one ends of fixed contacts 6 to 10 that are made of electroconductive metal are arranged at concentric positions around a center point P1 of the base 2: The ends of the fixed contacts 6 to 10 are spaced from each other. And the other ends 6A to 10A of the fixed contacts 6 to 10 are spaced from each other and bent in the same direction outside the base 2 after going through an opening section that pierces through a side wall 2B of the base 2.

Furthermore, the plate spring 3 includes a flat main body section 2A on which a plurality of flat arm sections 3B to 3F are spaced from each other such that they correspond to the fixed contacts 6 to 10 on the base 2. The main body section 3A and the arm sections 3B to 3F are formed in a single unit. And as shown in Fig. 3, the plate spring 3 has mountain-like curved sections (also referred to as curving projection sections, hereinafter) 3BZ to 3FZ at predetermined positions between the tips 3BX to 3FX of the arm sections 3B to 3F and the base ends 3BY to 3FY where the arm sections 3B to 3F are connected to the main body section 3: The curving projection sections 3BZ to 3FZ protrude in a direction toward one surface 3G of the main body section 3A. And each of the arm sections 3B to 3F of the plate spring 3 is bent at a predetermined position between the curving projection section 3BZ to 3FZ and the tip 3BX to 3FX. The tips 3BX to 3FX are therefore curved toward the other surface 3H of the main body section 3A. Moreover, the tips 3BX to 3FX of the arm sections 3B to 3F serve as movable contacts that contact the corresponding fixed contacts 6 to 10. By the way, the tips 3BX to 3FX of the arm sections 3G to 3F will be referred to as movable contacts 3BX to 3FX.

Furthermore, projection sections 2AXX and 2AXY are formed at predetermined positions on the first step section 2AX of the concave undersurface 2A of the base 2. Furthermore, the plate spring 3 has opening sections 3AX and 3AY piercing through predetermined positions of the main body section 3A such that they correspond to the projection sections 2AXX and 2AXY of the base 2. And the projection sections 2AXX and 2AXY of the base 2 are inserted into the corresponding opening sections 3AX and 3AY of the plate spring 3, respectively. Accordingly, when the plate spring 3 is attached to the base 2, the movable contacts 3BX to 3FX of the arm sections 3B to 3F are positioned facing the corresponding fixed contacts 6 to 10.

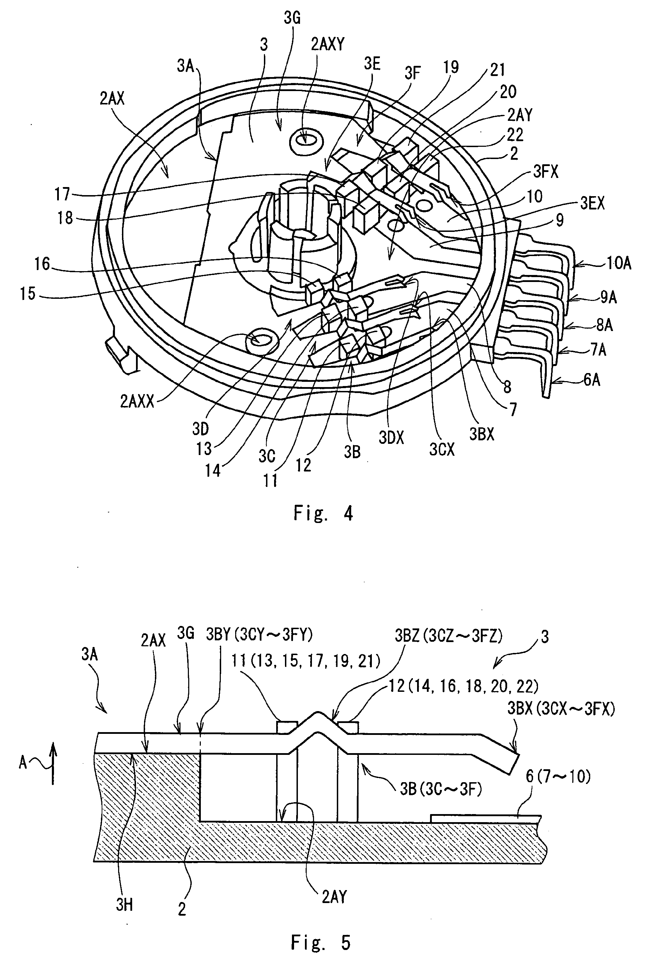

In this case, as shown in Figs. 4 and 5, on the concave undersurface 2A of the base 2, the base ends 3BY to 3FY of the arm sections 3B to 3F of the plate spring 3 are substantially positioned at the boundary between the first and second step sections 2AX and 2AY. Moreover, the other surface 3H of the main body section 3A of the plate spring 3 is attached to the first step section 2AX such that its entire area is totally in contact with the first step section 2AX. Accordingly, when the plate spring 3 is attached to the base 2, the whole arm sections 3B to 3F are positioned above the second step section 2AY. That is, when no external force is applied to the arm sections 3B to 3 F of the plate spring 3, there is a space between the movable contacts 3BX to 3FX and the corresponding fixed contacts 6 to 10. Moreover, on the second step section 2AY of the concave undersurface 2A of the base 2, a plurality of columnar guide sections 11 to 22 are vertically formed such that they flank each of the arm sections 3B to 3F of the plate spring 3 from their width direction. The guide sections 11 to 22 limit the width-direction movement of the arm sections 3B to 3F of the plate spring 3. Accordingly, the plate spring 3 between the guide sections 11 to 22 can be bent in a direction toward one surface 3G of the main body section 3A as indicated by an arrow A (referred to as a contact-departing direction, hereinafter) and in the opposite direction or a direction toward the other surface 3H (referred to as a contact-contacting direction, hereinafter).

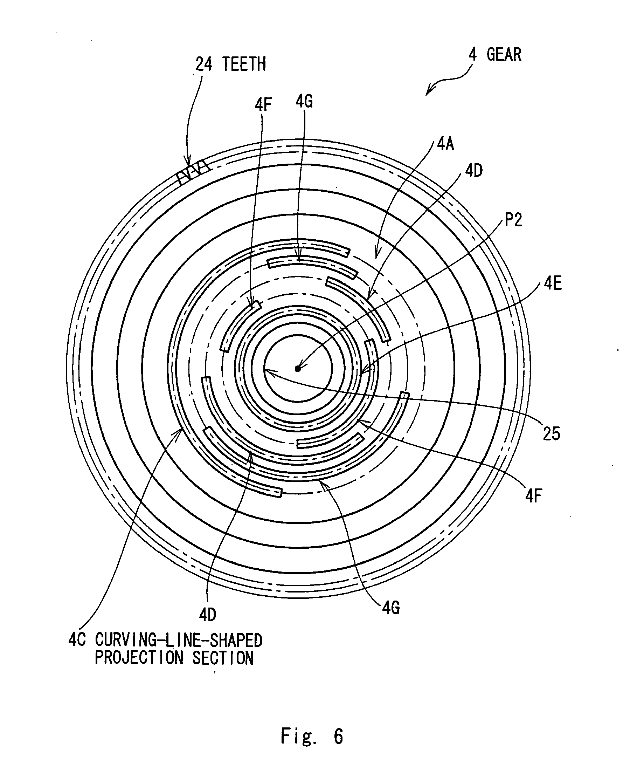

On the other hand, as shown in Fig. 6, the gear 4 has a plurality of teeth 24 formed around the circumference at predetermined intervals. In addition, the gear 4 has a shaft hole 25 piercing through its center from one surface 4A to the other surface 4B such that it corresponds to the rotation shaft 5 of the base 2. Moreover, on the surface 4A of the gear 4, a plurality of curving projection sections (referred to as curving-line-shaped projection sections, hereinafter) 4C to 4G are formed at concentric positions around a center point P2 of the gear 4 such that they correspond to the curving projection sections 3BZ to 3FZ of the arm sections 3B to 3F of the plate spring 3: The curving-line-shaped projection sections 4C to 4G are substantially in the shape of a concentric circle or an arc of a concentric circle around the center point P2. By the way, the locations where the curving-line-shaped projection sections 4C to 4G are formed and their lengths are determined so that each of the curving-line-shaped projection sections 4C to 4G can help detect an amount of movement of a movable section driven by a motor (described later). And the rotation shaft 5 of the base 2 is inserted into the shaft hole 25 such that the surface 4A of the gear 4 (Fig. 2) faces the concave undersurface 2A of the base 2. By the way, the center point P2 of the gear 4 attached to the base 2 is aligned with an imaginary line that goes through the center point P1 of the base 2. Accordingly, the gear 4 is mounted on the base 2 such that it can rotate around the rotation shaft 5 in one direction, indicated by an arrow B, and in the opposite direction, while the surface 4A's concentric positions where the curving-line-shaped projection sections 4C to 4G are formed face the corresponding peaks of the curving projection sections 3BZ to 3FZ of the arm sections 3B to 3F of the plate spring 3.

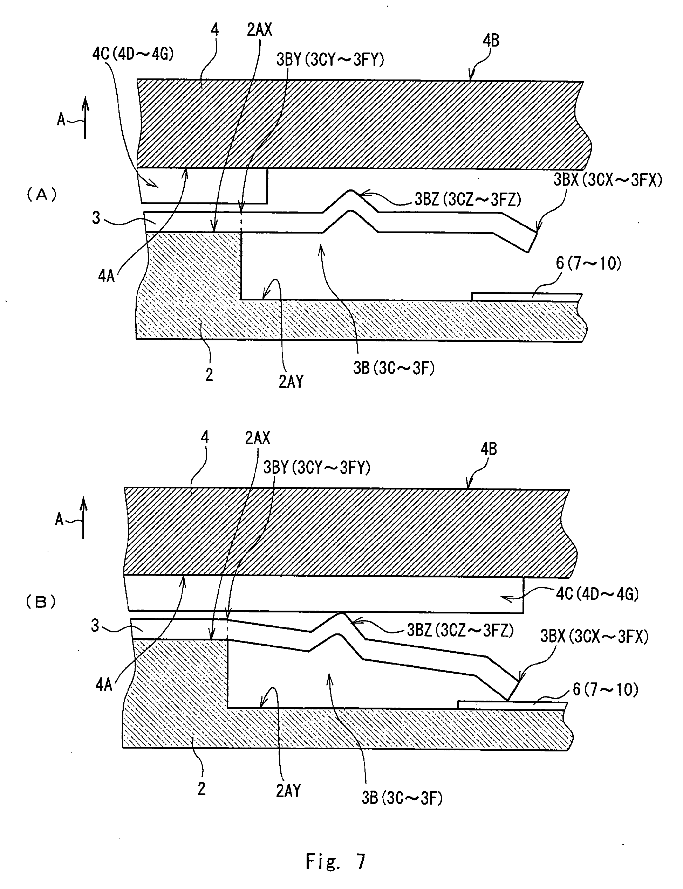

In this case, as shown in Figs. 7(A) and (B), the depth of the first step section 2AX (that is, where the main body section 3A of the plate spring 3 is attached) is determined so that, when the curving projection sections 3BZ to 3FZ of the arm sections 3B to 3F of the plate spring 3 face an area of the gear 4's surface 4A where the curving-line-shaped projection sections 4C to 4G are not formed, there is a space between the movable contacts 3BX to 3FX of the arm sections 3B to 3F and the corresponding fixed contacts 6 to 10. In addition, the height of the curving-line-shaped projection sections 4C to 4G of the gear 4 is determined so that, when the curving-line-shaped projection sections 4C to 4G face the corresponding curving projection sections 3BZ to 3FZ of the arm sections 3B to 3F of the plate spring 3, the curving-line-shaped projection sections 4C to 4G push the curving projection sections 3BZ to 3FZ in the contact-contacting direction.

Accordingly, in the rotary encoder 1, with the gear 4 rotating on the base 2 in the one or other direction, if the curving-line-shaped projection sections 4C to 4G of the gear 4 are not on the corresponding peaks of the curving projection sections 3BZ to 3FZ of the arm sections 3B to 3F of the plate spring 3, there is a space between the movable contacts 3BX to 3FX of the arm sections 3B to 3F of the plate spring 3 and the corresponding fixed contacts 6 to 10. On the other hand, in the rotary encoder 1, with the gear 4 rotating on the base 2 in the one or other direction, if the curving-line-shaped projection sections 4C to 4G of the gear 4 are on the corresponding peaks of the curving projection sections 3BZ to 3FZ of the arm sections 3B to 3F of the plate spring 3, the curving-line-shaped projection sections 4C to 4G push down the corresponding curving projection sections 3BZ to 3FZ. In this manner, in the rotary encoder 1, the arm sections 3B to 3F, on which formed are the curving projection sections 3BZ to 3FZ that the curving-line-shaped projection sections 4C to 4G of the gear 4 push down, are bent at their base ends 3BY to 3FY in the contact-contacting direction as if rotating. As a result, the movable contacts 3BX to 3FX of the arm sections 3B to 3F touch the corresponding fixed contacts 6 to 10.

In that manner, in the rotary encoder 1 whose gear 4 is rotating on the base 2 in the one or other direction, while the curving-line-shaped projection sections 4C to 4G of the gear 4 are on the corresponding peaks of the curving projection sections 3BZ to 3FZ of the arm sections 3B to 3F of the plate spring 3, the curving-line-shaped projection sections 4C to 4G keep pushing down the corresponding curving projection sections 3BZ to 3FZ. Accordingly, in the rotary encoder 1, while the curving-line-shaped projection sections 4C to 4G of the gear 4 are on the corresponding peaks of the curving projection sections 3BZ to 3FZ of the arm sections 3B to 3F of the plate spring 3, the movable contacts 3BX to 3FX of the arm sections 3B to 3F remain in contact with the corresponding fixed contacts 6 to 10.

On the other hand, in the rotary encoder 1 whose gear 4 is rotating on the base 2 in the one or other direction, when the curving-line-shaped projection sections 4C to 4G of the gear 4 come down from the curving projection sections 3BZ to 3FZ of the arm sections 3B to 3F of the plate spring 3, the curving-line-shaped projection sections 4C to 4G stop pushing down the curving projection sections 3BZ to 3FZ. As a result, in the rotary encoder 1, the arm sections 3B to 3F, on which formed are the curving projection sections 3BZ to 3FZ released from pressure, restores its shape, as if, by the force of the plate spring 3, rotating around the base ends 3By to 3FY in the contact-departing direction. In this manner, the rotary encoder 1 again moves the movable contacts 3BX to 3FX of the arm sections 3B to 3F of the plate spring 3 away from the corresponding fixed contacts 6 to 10.

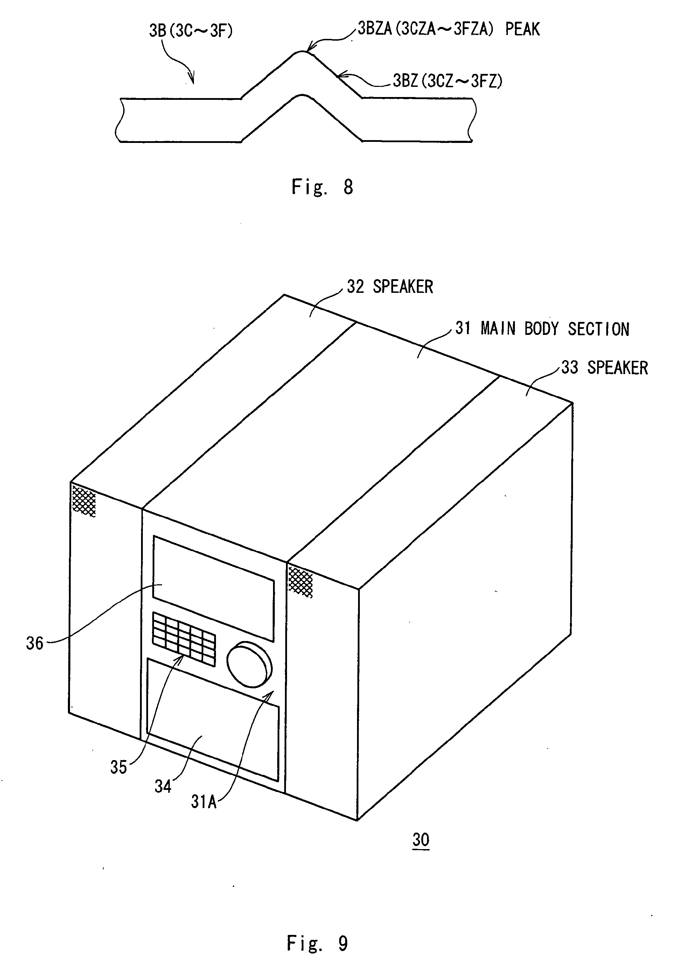

In that manner, in the rotary encoder 1, according to a rotation angle of the gear 4 with respect to the base2, at least one of the movable contacts 3BX to 3FX makes contacts with the corresponding fixed contact 6 to 10. By the way, as shown in Fig. 8, in the plate spring 3, the peaks 3BZA to 3FZA of the curving projection sections 3BZ to 3FZ of the arm sections 3B to 3F are formed in the shape of an arc of a circle. Therefore, when the curving-line-shaped projection sections 4C to 4G of the gear 4 are pressed down and move on the curving projection sections 3BZ to 3FZ during the rotation of the gear 4 on the base 2, the curving-line-shaped projection sections 4C to 4G do not scrape against the peaks 3BZA to 3FZA of the curving projection sections 3BZ to 3FZ. This prevents microscopic particles, which are scraped from the curving-line-shaped projection sections 4C to 4G in the concave section of the base 2, from interfering with the movable contacts 3BZ to 3FX contacting the fixed contacts 6 to 10 even when the gear 4 rotates on the base 2 in the rotary encoder 1. It also prevents abrasion of the curving-line-shaped projection sections 4C to 4G, ensuring that the curving-line-shaped projection sections 4C to 4G appropriately press the curving projection sections 3BZ to 3FZ.

And referring to Fig. 9, the following describes a disc playback apparatus 30 including a rotary encoder 1 whose structure is the same as the above. The disc playback apparatus 30 includes an auto-changer function of CD. And the disc playback apparatus 30 includes: a main body section 31, which accepts a plurality of CDs (five discs, for example) and reproduces music data from those CDs; and a pair of stereo speakers 32 and 33, which output music based on the music data reproduced by the main body section 31. In this case, a stocker insertion opening 34 is formed on a front panel 31A of the main body section 31 of the disc playback apparatus 30: A stocker collectively holding a plurality of CDs is inserted into the stocker insertion opening 34. In addition, an operation section 35 is provided on the front panel 31A of the main body section 31: The operation section 35 includes various operation keys through which various commands, such as a selection command of selecting a playback-target CD, a playback start command and a playback stop command, can be input. Moreover, a display 36 is provided on the front panel 31A of the main body section 31: The display 36 displays various kinds of information relating to the played CD and music data.

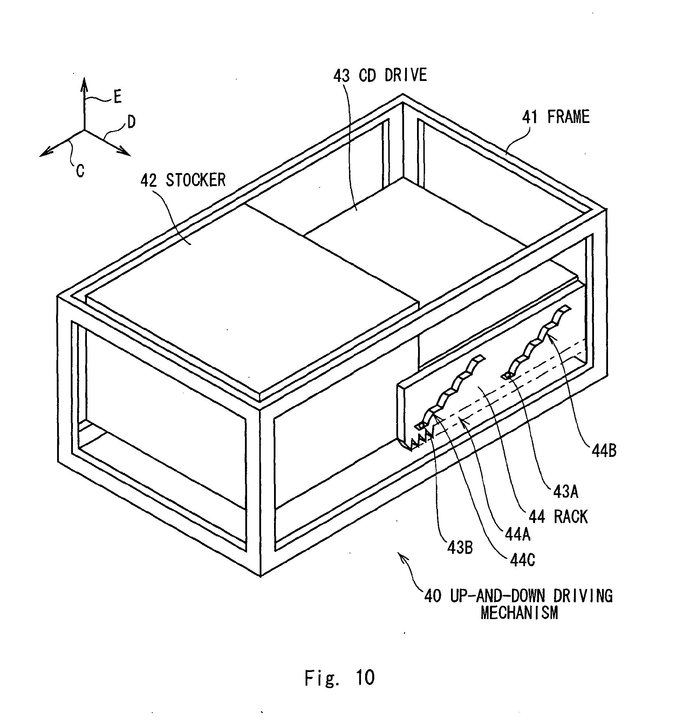

And as shown in Fig. 10, the disc playback apparatus 30 includes an up-and-down driving mechanism 40 inside the main body section 31. The up-and-down driving mechanism 40 includes a frame 41, which is substantially in the shape of a box frame. A stocker 42 is housed in the frame 41 via the stocker insertion hole 34 such that it is positioned on the side of the front panel 31A of the main body section 31 or in a direction indicated by an arrow C (referred to as a front direction, hereinafter). By the way, the stocker 42 contains a plurality of CDs in the following manner: The data recording surfaces of those CDs are parallel to an imaginary plane formed by the front direction and the right direction that is indicated by an arrow D perpendicular to the front direction; and the stacked CDs are appropriately spaced away from each other in a direction of the thickness of the CD. In addition, a CD drive 43 is housed in the frame 41 such that it is positioned on the opposite side or in a direction opposite to the front direction (also referred to as a backside direction, hereinafter); and its slit-like CD insertion/ejection opening (not shown) faces in the front direction (i.e. it faces the stocker 42) with its slit-like opening substantially parallel to the right direction. At the same time, the CD drive 43 can be lifted and lowered by a guide (not shown) in the upward direction indicated by an arrow E and the opposite downward direction.

Furthermore, plate-like racks 44 are provided on the right and left sides of the frame 41 such that their end sections 44A (referred to as a tooth-formed end, hereinafter) where teeth are formed face downward and that they can slide in the front direction and the backside direction. In this case, the rack 44 includes two step-like grooves 44B and 44C piercing through the rack 44 from one surface to the other surface. And engaging projections 43A and 43B that protrudes from the CD drive 43 in the right and left directions are inserted into the grooves 44B and 44C of the rack 44. Furthermore, for example, a motor and a plurality of gearwheels that convey the rotation of an output shaft of the motor are housed in the frame 41 such that they are positioned on the under side of the frame 41: The gearwheels properly mesh with one another. One of the gearwheels is engaged in the tooth-formed end 44A of the rack 44.

Accordingly, in the up-and-down driving mechanism 40, when the output shaft of the motor rotates in one direction, the gearwheels convey the rotation of the output shaft of the motor to the rack 44 which then slides for example toward the front direction. And in the up-and-down driving mechanism 40, when the rack 44 slides toward the front direction, the grooves 44B and 44C of the rack 44 moves and lifts up the engaging projections 43A and 43B of the CD drive 43, lifting up the CD drive 43 along with the engaging projections 43A and 43B. On the other hand, in the up-and-down driving mechanism 40, when the output shaft of the motor rotates in the other direction, the gearwheels convey the rotation of the output shaft of the motor to the rack 44 which then slides for example toward the backside direction. And in the up-and-down driving mechanism 40, when the rack 44 slides toward the backside direction, the grooves 44B and 44C of the rack 44 moves and pushes down the engaging projections 43A and 43B of the CD drive 43, lowering the CD drive 43 along with the engaging projections 43A and 43B. In that manner, the disc playback apparatus 30 can lift and lower the CD drive 43.

In addition to the above configuration, the above rotary encoder 1 illustrated in Figs. 1 to 8 (but not shown in Fig. 10) is housed in the frame 41 on the side of the downward direction. And the gear 4 of the rotary encoder 1 meshes with a gearwheel that conveys the rotation of the output shaft of the motor. Accordingly, in the frame 41, when the output shaft of the motor rotates in the one direction or the other direction, the rotation of the output shaft of the motor is conveyed via the gearwheel to the gear 4 of the rotary encoder 1. The gear 4 rotates as the output shaft of the motor rotates.

And when driving the output shaft of the motor to rotate, the disc playback apparatus 30 detects an amount of movement (i.e. an amount of rising/lowering) of the CD drive 43 moving in the upward or downward direction, in accordance with the contact condition between the movable contacts 3BX and 3FX of the rotary encoder 1 and the corresponding fixed contacts 6 to 10. In this manner, the disc playback apparatus 30 detects, through the rotary encoder 1, an amount of the movement of the CD drives 43. Based on the detected amount of movement, the disc playback apparatus 30 controls the motor to lift or lower the CD drive 43 so that the CD insertion/ejection opening of the CD drive 43 faces a CD inside the stocker 42. And in the disc playback apparatus 30, after a certain CD inside the stocker 42 faces the CD insertion/ejection opening of the CD drive 43, a CD carrier mechanism (not shown) provided inside the frame 41 retrieves the CD from the stocker 42 and then inserts it into the CD drive 43 through the CD insertion/ejection opening. Therefore, the CD drive 43 of the disc playback apparatus 30 can reproduce music data from the inserted CD. And in the disc playback apparatus 30, after the CD drive 43 completes the reproduction of music data, the CD drive 43 ejects the reproduction-completed CD and the CD carrier mechanism returns the ejected CD into the stocker 42.

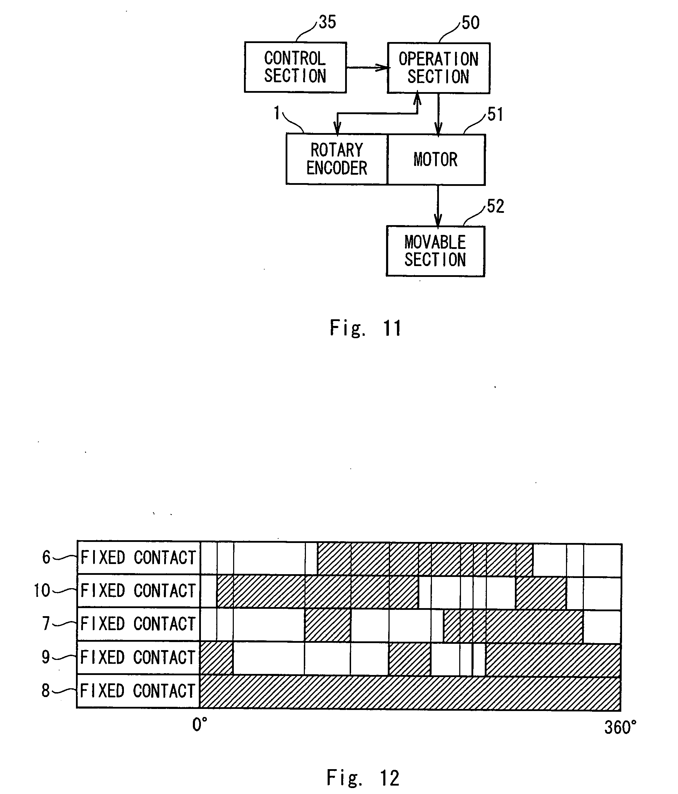

With reference to Fig. 11, the following describes the circuit configuration of the disc playback apparatus 30. The above disc playback apparatus 30 includes a control section 50 that takes overall control of the disc playback apparatus 30. The control section 50 is connected to all the fixed contacts 6 to 10 extending from the base 2 of the rotary encoder 1. In this case, for example, out of the curving-line-shaped projection sections 4C to 4G of the gear 4 of the rotary encoder 1, only the curving-line-shaped projection section 4E is formed in a circle. Accordingly, in the rotary encoder 1, whether the gear 4 rotates or not, the circular curving-line-shaped projection section 4E always pushes the corresponding curving projection sections 3DZ. As a result, the movable contact 3DX of the arm section 3D on which the curving projection section 3DZ corresponding to the circular curving-line-shaped projection section 4E is formed is always in contact with the corresponding fixed contact 8.

Accordingly, for example, out of the fixed contacts 6 to 10, only the fixed contact 8, which is always in contact with the movable contact 3DX, is continuously provided with a predetermined electric potential from the control section 50. Accordingly, the plate spring 3, which is in contact (or electrically contact) with the fixed contact 8 via the movable contact 3DX, is maintained at the same electric potential level as that of the fixed contact 8. Accordingly, as shown in Fig. 12, in the rotary encoder 1, when the remaining movable contacts 3BX, 3CX, 3EX and 3FX contact the corresponding fixed contacts 6, 7, 9 and 10 as the gear 4 rotates, the fixed contacts 6, 7, 9 and 10, which are in contact with the movable contacts 3BX, 3CX, 3EX and 3FX, become the same electric potential level (illustrated by diagonal lines in Fig. 12) as a result of electrically connecting to the plate spring 3 and the fixed contact 8 whose potential is maintained at the predetermined level.

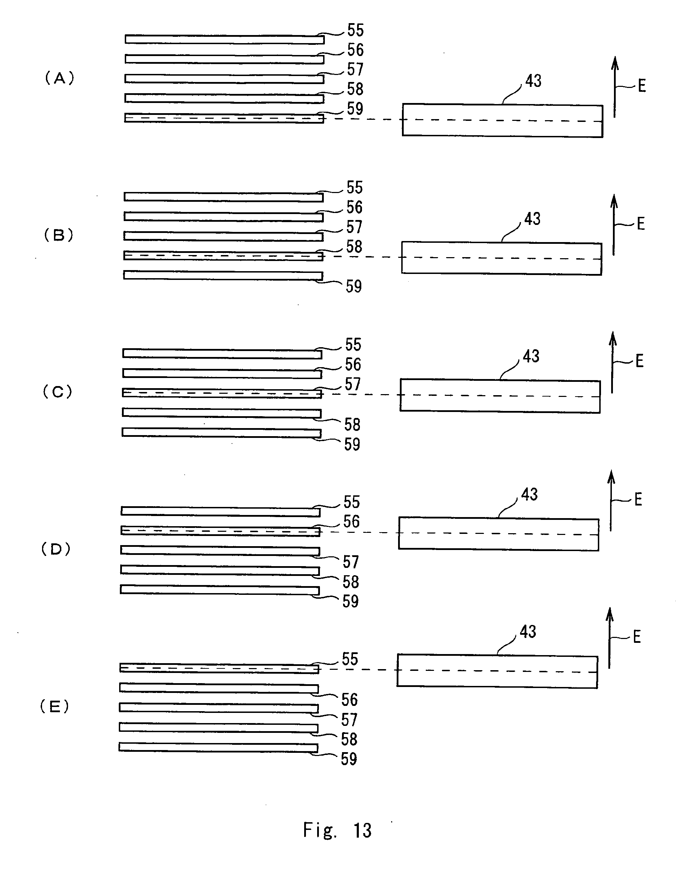

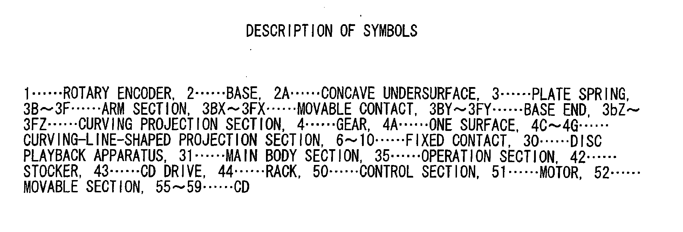

Accordingly, the control section 50 observes how the electric potential of each fixed contact 6 to 10 of the rotary encoder 1 changes, and regards the observed change as an output from the rotary encoder 1. Based on the changing electric potential and which fixed contacts' (6 to 10) electric potentials have changed, the control section 50 detects a rotational angle of the gear 4. And based on the rotational angle of the gear 4 of the rotary encoder 1, the control section 50 is designed to be able to detect an amount of movement of the CD drive 43. Accordingly, when a user operates the operation section 35 to select one of CDs in the stocker 42 for playback, the control section 50 detects the position of the CD drive 43 based on an output of the rotary encoder 1 at the time. As a result, if the CD drive 43 needs to be lifted or lowered in order to accept the CD selected by the user, the control section 50 controls a motor 51 to drive and rotate it. In this manner, the control section 50 drives a movable section 52 including the racks 44 and the CD drive 43 (i.e. lifting or lowering the CD drive 43 by using the racks 44). While driving the movable section 52, the control section 50 detects an amount of movement of the CD drive 43 based on an output of the rotary encoder 1. And the control section 50 controls the motor 51 in accordance with the detection result. Accordingly, as shown in Figs. 13(A) to (E), the control section 50 lifts or lowers the CD drive 43, makes a CD 55 ......, or 59, selected by the user for playback, face the CD insertion/ejection opening and then stops lifting and lowering the CD drive 43.

With the above configuration, when the disc playback apparatus 30 drives and rotates the motor 51 to lift or lower the CD drive 43, the rotation of the output shaft of the motor 51 is conveyed to the racks 44, which then slide in the front or backside direction. In addition, it is conveyed to the gear 4 of the rotary encoder 4, which then rotates in the one or other direction. At this time, in the rotary encoder 1, as the gear rotates on the base 2 in the one or other direction, at least one of the curving-line-shaped projection sections 4C to 4G provided on the surface 4A of the gear 4 runs up the corresponding curving projection section 3BZ to 3FZ of the arm section 3B to 3F of the plate spring 3. As a result, the curving-line-shaped projection section 4C to 4G pushes the curving projection section 3BZ to 4FZ in the contact-contacting direction. Accordingly, the rotary encoder 1 bends the arm section 3B to 3F, on which the curving projection section 3BZ to 3FZ that the curving-line-shaped projection section 4C to 4G of the gear 4 has pushed is formed, as if pushing it down in the contact-contacting direction, so that the movable contact 3BX to 3FX of the arm section 3B to 3F touches the corresponding fixed contact 6 to 10.

Subsequently, in the rotary encoder 1, when the curving-line-shaped projection section 4C to 4G of the gear 4 comes down from the corresponding curving projection section 3BZ to 3FZ of the arm section 3B to 3F as the gear 4 rotates on the base 2 in the one or other direction, curving-line-shaped projection section 4C to 4G stops pushing down the curving projection section 3BZ to 3FZ. As a result, in the rotary encoder 1, the arm section 3B to 3F, on which the released curving projection section 3BZ to 3FZ is formed, returns to the original shape, thereby separating the movable contact 3BX to 3FX of the arm section 3B to 3F from the corresponding fixed contact 6 to 10. At this time, the disc playback apparatus 30 detects an amount of movement of the CD drive 43, in accordance with an output of the rotary encoder 1 which is obtained as a result of whether the movable contacts 3BX to 3FX are in contact with the fixed contacts 6 to 10. Based on the detected amount of movement, the disc playback apparatus 30 controls the motor 51 to lift or lower the CD drive 43 to a desired location.

Accordingly, the disc playback apparatus 30 can make the movable contacts 3BX to 3FX of the arm sections 3B to 3F, on which the curving projection sections 3BZ to 3FZ are formed, touch the corresponding fixed contacts 6 to 10 by directly pushing, in the rotary encoder 1, the curving-line-shaped projection sections 4C to 4G of the gear 4 down on the curving projection sections 3BZ to 3FZ of the plate spring 3. Therefore, in the disc playback apparatus 30, the configuration of the rotary encoder 1 can be simplified because it does not necessarily need a component between the gear 4 and the plate spring 3 to push down the arm sections 3B to 3F.

According to the above configuration, the plate spring 3 is attached to the rotary encoder 1: The plate spring 3 includes the arm sections 3B to 3F, on which the curving projection sections 3BZ to 3FZ are formed between the base ends 3BY to 3FY and the tips or movable contacts 3BX to 3FX, facing the base 2 where the fixed contacts 6 to 10 are formed at concentric positions on the concave undersurface 2A. In addition, the gear 4, on which the curving-line-shaped projection sections 4C to 4G are formed at concentric positions on the surface 4A, is attached to the rotary encoder 1 so that it can rotate. And in the rotary encoder 1, the curving-line-shaped projection sections 4C to 4G push down the corresponding curving projection sections 3BZ to 3FZ as the gear 4 rotates on the base 2 in the one or other direction, thereby bending the arm sections 3B to 3F as if pushing them down in the contact-contacting direction. As a result, the movable contacts 3BX to 3FX of the bent arm sections 3B to 3F touch the corresponding fixed contacts 6 to 10. Accordingly, in the present embodiment, the configuration of the rotary encoder 1 can be simplified because it does not necessarily need a component between the gear 4 and the plate spring 3 to push down the arm sections 3B to 3F. Therefore, the present embodiment realizes the rotary encoder 1 whose configuration can be simplified. In addition, in the present embodiment, incorporating the above rotary encoder 1 into the disc playback apparatus 30 can realize the disc playback apparatus 30 whose rotary encoder 1's configuration can be simplified.

By the way, the shapes and dimensions of the rotary encoder 1's components, such as the base 2 and the plate spring 3, are determined at design stage. Actually, the dimensional tolerances are also determined for molding. And the rotary encoder 1 is manufactured by putting together the components. It means that the rotary encoder 1 is manufactured within the total sum of the dimensional tolerances of those components. However, the rotary encoder 1 of the present invention has fewer components than a conventional rotary encoder and a similarly configured mode switch. Therefore, even if the dimensional tolerances of the components of the rotary encoder 1 of the present invention (such as the base 2 and the plate spring 3) are determined such that they are similar to those of conventional rotary encoder's or mode switch's components (such as a base or a contact spring block), the total sum of the dimensional tolerances of the rotary encoder 1 becomes smaller than that of the conventional encoder or mode switch, improving the precision of assembling the rotary encoder 1.

In that manner, according to the present invention, the precision of assembling the rotary encoder 1 has improved. Therefore, according to the rotational angle of the gear 4 with respect to the base 2, the movable contacts 3BX to 3FX can more precisely contact or separate from the fixed contacts 6 to 10 than those of a conventional rotary encoder or mode switch. Thus, according to the present invention, the control section 50 of the disc playback apparatus 30 equipped with the rotary encoder 1 can more precisely detect an amount of movement of the CD drive 43 from an output of the rotary encoder 1 than those equipped with a conventional rotary encoder or mode switch. As a result, the disc playback apparatus 30 can precisely lift and lower the CD drive 43. Therefore, in the disc playback apparatus 30, the CDs 55 to 59 can be appropriately transferred between the stocker 42 and the CD drive 43. Accordingly, when the CDs 55 to 59 are transferred between the stocker 42 and the CD drive 43, the disc playback apparatus 30 can prevent the CDs 55 to 59 from hitting somewhere other than the CD insertion/ejection opening of the CD drive 43 and the insertion opening of the stocker 42. In addition, the disc playback apparatus 30 can almost certainly prevent the data recording surfaces of the CDs 55 to 59 from being scraped by the edges of the CD insertion/ejection opening and insertion opening of the stocker 42 or the like.

In addition, since the disc playback apparatus 30 can precisely lift and lower the CD drive 43, the number of CDs 55 to 59 inserted into the stocker 42 of the same outside dimensions can increase, compared to those equipped with a conventional rotary encoder or mode switch. By the way, if it is tried to increase the number of CDs 55 to 59 housed in the stocker 42 in the similar way with a conventional encoder or mode switch, the precision of the dimensions of the components of the conventional encoder or mode switch must increase by narrowing the dimensional tolerances. As a result, the precision of assembling the rotary encoder or mode switch must increase. And in order to increase the precision of the dimensions of the components of the rotary encoder or mode switch, the precision of molding of a molding machine should be maintained for molding those components by strictly adjusting and controlling the machine. In addition, besides the molding of those components, secondary processes for materials are sometimes required to mold components such as a plate spring, in order to improve the precision of material dimensions and flatness. Accordingly, the dimensions of those components may not be easily formed into precise dimensions. As a result, the conventional rotary encoder or mode switch may not be precisely assembled. On the other hand, according to the present invention, without performing the strict adjustment and control of the molding machine, the secondary processes for materials (i.e. without complex manufacturing processes), and strictly controlling the dimensional tolerances of the components, the precision of assembling the rotary encoder 1 can easily improve with the simple configuration in which the number of components has been reduced compared to a conventional rotary encoder or mode switch.

In addition, the rotary encoder 1 of the present invention does not have an intermediate cam or an actuator between the plate spring 3 and the gear 4. Therefore, the rotary encoder 1 becomes thin as a whole, compared to a conventional rotary encoder or mode switch. In that manner, the precision of assembling the rotary encoder 1 has improved with the reduced number of components compared to the conventional rotary encoder or mode switch. However, if the precision of assembling becomes the same as or similar to that of the conventional one, then this allows extra tolerances to be added to the original dimensional tolerances of the components. And if the plate spring 3 (out of the components of the rotary encoder 1) is made of a thin material whose thickness is below a certain level, the plate spring 3 can be easily bent. However, in the rotary encoder 1, by allocating at least part of the extra tolerances for, for example, the dimensional tolerances of the bent plate spring 3, the rotary encoder 1 can be assembled even if the plate spring 3 is further thinned. And, by thinning the plate spring 3 in that manner, the rotary encoder 1 can be thinned further with almost the same or better assembling precision as that of a conventional rotary encoder or mode switch.

Furthermore, in the rotary encoder 1 of the present invention, if the components become smaller, the dimensional tolerances of those components sometimes need to increase according to the precision of molding of a molding machine. However, in the rotary encoder 1, by allocating the above extra tolerances for the dimensional tolerances of the components to slightly increase those dimensional tolerances, the components can be easily downsized. And even if those downsized components are used for assembling the rotary encoder 1, the rotary encoder 1 as a whole can be downsized with almost the same or better assembling precision as that of a conventional rotary encoder or mode switch.

Furthermore, since the rotary encoder 1 does not have many components, the number of assembling processes for manufacturing the rotary encoder 1 can be reduced compared to a conventional rotary encoder and mode switch. In addition, since the rotary encoder 1 does not have many components, the configuration of the components assembled can be simplified. As a result, the operation of the movable contacts 3BX to 3FX contacting and separating from the fixed contacts 6 to 10 can be simplified to prevent any failures. In this manner, the number of components in the rotary encoder 1 is reduced while its operation is simplified. Therefore, even if a failure occurs, the cause of the failure can be easily analyzed.

By the way, a conventional rotary encoder has an intermediate cam on the top of a flexible arm, both the intermediate cam and the flexible arm made from resin materials. In this case, if the flexible arm of the conventional rotary encoder has not been thinned enough, it may cause a problem: The flexible arm can be deformed as if pushing down the intermediate cam if a convex strip of a rotor pushes the intermediate cam for a long time and, even after the rotor's convex strip comes down from the intermediate cam, the flexible arm may not return to its original shape. That is, in the above rotary encoder, there is a possibility that the movable contacts stay on the fixed contacts and do not move. Accordingly, the conventional rotary encoders are believed to have a thin flexible arm to prevent deformation. However, if there are no bearings in the above rotary encoder to support the intermediate cam, the convex strip produces, when the rotor rotates, force against the intermediate cam as if pushing in the rotational direction, and this can deform the flexible arm. That is, the movable contacts can never contact the fixed contacts again in the above rotary encoder. Therefore, the conventional rotary encoders have complex configuration in order to control the flexible arm and the intermediate cam: they include the flexible arm with the intermediate cam and the bearings to support the intermediate cam.

Moreover, in a similar way, a conventional mode switch has an actuator on the tip of an actuator plate, both the actuator and the actuator plate made from resin materials. Accordingly, the conventional mode switch has complex configuration: It includes an actuator, a thin, slim actuator plate and a guide brace member engaged with the actuator. This prevents the deformation and crack of the actuator plate and drives the actuator plate and the actuator.

On the other hand, in the rotary encoder 1 of the present invention, the curving-line-shaped projection sections 4C to 4G of the gear 4 directly pushes the curving projection sections 3BZ to 3FZ of the plate spring 3 to push down the arm sections 3B to 3F. Accordingly, with the simple configuration, the rotary encoder 1 makes sure the movable contacts 3BX to 3FX appropriately contact the fixed contacts 6 to 10 and prevents the movable contacts 3BX to 3FX from staying on the fixed contacts 6 to 10. Accordingly, the rotary encoder 1 of the present invention can offer higher operational reliability than a conventional rotary encoder and mode switch.

By the way, in the above-noted embodiment, the disc playback apparatus 30 is designed to lift and lower the CD drive 43. However, the present invention is not limited to this. Alternatively, the CD drive 43 may be fixed while the stocker 42 rises and lowers.

Moreover, in the above-noted embodiment, the rotary encoder of the present invention is applied to the above rotary encoder 1 illustrated in Figs. 1 to 13. However the present invention is not limited to this. It can be also applied to various rotary encoders whose gear's curving-line-shaped projection sections can directly push down the plate springs' arm sections: They may include rotary encoders which have various numbers of movable and fixed contacts.

Furthermore, in the above-noted embodiment, a drive apparatus of the present invention is applied to the above disc playback apparatus 30 illustrated in Figs 1 to 13. However the present invention is not limited to this. It can be also applied to various drive apparatuses as long as they have a movable section, a drive section that drives the movable section and the rotary encoder of the present invention: They may include a robot apparatus, an automatic door or the like.

Furthermore, in the above-noted embodiment, as a base whose undersurface's concentric positions are provided with fixed contacts, the above base 2 of the rotary encoder 1 illustrated in Figs. 1 to 13 is applied. However the present invention is not limited to this. Various bases can also be applied, such as the one including various numbers of fixed contacts.

Furthermore, in the above-noted embodiment, as a plate spring that includes a plurality of arm sections whose tips are equipped with movable contacts corresponding to the fixed contacts and that also includes curving projection sections between the tips of the arm sections and base ends, the above plate spring 3 of the rotary encoder 1 illustrated in Figs. 1 to 13 is applied. However the present invention is not limited to this. Various plate springs can also be applied, such as a plate spring whose arm sections have a different shape of curving projection sections (like arc-shaped one) or a plate spring that has a different number of arm sections.

Furthermore, in the above-noted embodiment, as a gear whose one surface's concentric positions are provided with curving-line-shaped projection sections that extend along the concentric circles and correspond to the curving projection sections of the plate spring, the above gear 4 of the rotary encoder 1 illustrated in Figs. 1 to 13 is applied. However the present invention is not limited to this. Various gears can be also applied, such as the one including a different number of curving-line-shaped projection sections.

Furthermore, in the above-noted embodiment, as a drive section, the above motor 51 of the disc playback apparatus 30 illustrated in Figs. 1 to 13 is applied. However the present invention is not limited to this. Various drive sections can be also applied, such as combustion engines.

Furthermore, in the above-noted embodiment, as a movable section moved by a driving force of a drive section, the above racks 44 and CD drive 43 of the disc playback apparatus 30 illustrated in Fig. 1 to 13 are applied. However the present invention is not limited to this. Various movable sections can be also applied, such as a movable section produced by assembling a cam which conveys a driving force, a screw shaft, a belt, a chain, a CD drive and the like, or various movable components like an arm of a robot apparatus or an opening-and-closing section.

Furthermore, in the above-noted embodiment, as a storage section that stores a plurality of recording media, the above stocker 42 of the disc playback apparatus 30 illustrated in Figs. 1 to 13 is applied. However the present invention is not limited to this. Various storage sections can be also applied, such as a storage section that stores a plurality of recording media like semiconductor memories, magnetic disks or the like.

Furthermore, in the above-noted embodiments, as a playback section that reads out information from a recording medium picked up from the storage section and plays the information, the above CD drive 43 of the disc playback apparatus 30 illustrated in Figs. 1 to 13 is applied. However the present invention is not limited to this. Various playback sections can be also applied, such as a drive that can reproduce information from various recording media like semiconductor memories, magnetic disks or the like.

### Industrial Applicability

The present invention can be applied to a rotary encoder installed in a drive apparatus such as a robot apparatus having a movable section.

## Claims

1. A rotary encoder comprising:
a base whose undersurface's concentric positions are provided with fixed contacts;
a plate spring that includes a plurality of arm sections whose tips are equipped with movable contacts corresponding to the fixed contacts and that also includes curving projection sections between the tips of the arm sections and base ends; and
a gear whose one surface's concentric positions are provided with curving-line-shaped projection sections that extend along the concentric circles and that correspond to the curving projection sections of the plate spring, wherein:
the plate spring is attached to the base such that the movable contacts correspond to the fixed contacts; the gear is attached to the base such that the gear can rotate and the curving-line-shaped projection sections correspond to the curving projection sections of the plate spring; and, when the gear rotates, at least one of the curving-line-shaped projection sections pushes the corresponding curving projection section and the movable contact at the tip of the arm section on which the pushed curving projection section is formed touches the corresponding fixed contact.

2. A drive apparatus comprising:
a drive section;
a movable section moved by a driving force of the drive section;
a rotary encoder that detects an amount of movement of the movable section; and
a control section that controls the drive section in accordance with the amount of movement detected by the rotary encoder, wherein
the rotary encoder includes: a base whose undersurface's concentric positions are provided with fixed contacts; a plate spring that includes a plurality of arm sections whose tips are equipped with movable contacts corresponding to the fixed contacts and that also includes curving projection sections between the tips of the arm sections and base ends; and a gear whose one surface's concentric positions are provided with curving-line-shaped projection sections that extend along the concentric circles and that correspond to the curving projection sections of the plate spring, wherein: the plate spring is attached to the base such that the movable contacts correspond to the fixed contacts; the gear is attached to the base such that the gear can rotate and the curving-line-shaped projection sections correspond to the curving projection sections of the plate spring; and, when the gear rotates, at least one of the curving-line-shaped projection sections pushes the corresponding curving projection section and the movable contact at the tip of the arm section on which the pushed curving projection section is formed touches the corresponding fixed contact.

3. The drive apparatus according to claim 2, comprising:
a storage section that stores a plurality of recording media; and
a playback section that reads out information from a recording medium picked up from the storage section and plays the information, wherein:
either the storage section or the playback section is the movable section; and
the control section controls, in accordance with the amount of movement detected by the rotary encoder, an amount of movement of the movable section, which is the storage section or the playback section, such that one of the recording media stocked in the storage section faces the playback section.
